# EUROPEAN PATENT APPLICATION

(11) **EP 2 116 841 A1**
(43) Date of publication of application: **11.11.2009**
(21) Application number: 08014839.8
(22) Date of filing: 21.08.2008
(51) Int. Cl.: G01N 22/04

(54) **High frequency method and apparatus for measuring the humidity of materials by means of an open transmission line by varying the position of at least one screening element, which has a higher permittivity than the material under test**

(30) Priority: 06.05.2008 CZ 20080281
(71) Applicant: Jihoceska Universita V Ceskych Budejovicich, 37005 Ceské Budejovice (CZ); Vysoká skola technická a ekonomická, 37001 Ceské Budejovice (CZ)
(72) Inventor: Sír, Miloslav, CSc., Ing., 370 01 Ceské Budejovice (CZ); Loffelmann, Jirí, 180 00 Praha 8 (CZ); Váchal, Jan, CSc., Prof. Ing., 370 06 Ceské Budejovice (CZ); Krejca, Miroslav, Ing., 397 01 Písek (CZ); Skoda, Stanislav, RNDr., 370 06 Ceské Budejovice (CZ); Frelich, Jan, CSc., Prof. Ing., 370 05 Ceské Budejovice (CZ); Váchalová, Radka, Ph. D. Ing., 370 06 Ceské Budejovice (CZ)
(74) Representative: Sedlák, Jirí

(57) **Abstract**

The principle of the method for measuring of humidity of the measured material (1) by interaction with the electromagnetic field (2) transferred along the specific electromagnetic line (3,3') consists in the fact that the spatial propagation of the field (2) is regulated by means of the screening and routing element (4), which limits the interaction space (5). The interaction space (5) is also advantageously limited with the opposite limiting element (6). The material of elements (4,6) has a higher high frequency permittivity than the measured material (1). The elements (4,6) as well as the specific electromagnetic line (3,3') are mobile. The apparatus for the realization of this method consists of the aforesaid parts and the source and evaluation unit (7). The advantage of the method and apparatus according to the invention consists especially in the fact that the measuring is not of a destruction nature, is considerably more accurate than in case of known methods and enables the measuring in various depths of the measured material (1).

## Description

### Area of the invention

The invention concerns the area of measuring of humidity, i.e. the content of water in various materials by means of interaction of the measured material and the electromagnetic field.

### Prior art

There is a full range of known methods and apparatus for measuring of humidity of the material consisting of the mixture of a solid phase, water solution and, as the case may be, gas. Volume or weight humidity shall mean the ratio of the volume or weight of water to the volume or weight of the measured material.

The direct method of identification of water content in the material, the socalled gravimetric method, consists in weighting, drying and weighting the material again. The weight decrease after drying corresponds to the quantity of water in the material. With respect to some materials, it concerns a destruction method because the material shall be modified mechanically, e.g. be ground, so that it could be dried. The drying temperature exceeds 100° C and, therefore, this method cannot be used for a majority of materials with the content of organic compound, which is released in gaseous conditions or can start burning during the heating.

That is why various indirect methods of measured humidity have been developed, which take advantage of the fact that the electrophysical properties of water (water solution) differ from electrophysical properties of the solid phase and gas (e.g. electric conductibility, permittivity). Then humidity meters measure the electrophysical property of the mixture of the solid phase, water solution and, as the case may be, gas. The conversion of the measured properties to humidity is realized with the use of calibration relationships, which are obtained empirically by assigning the measured value of the electric quantity to the known humidity of the material in some humidity points. Such obtained pairs of values are organized in tables or are approximated with a suitable function.

In the author's certificate No. 229 723, the method of measurement is described, during which the measured substance is inserted into the space of transmitted electromagnetic signal, e.g. into the inner space of a waveguide or coaxial line, then the changes of dampening and/or phase speeds of transmitting propagation of this signal are measured and on the basis of the measurement or compensation of these changes, the specific composition of the mixture or solution is evaluated on the basis of previously known frequency dependencies of dampening and the phase speed of propagation of the signal differing for individual components of mixtures or solutions.

Pursuant to the Czech patent No. 274 975, humidity is measured for various mixtures of solutions, bulk and solid materials like e.g. agricultural soil, sand, reinforced concrete structures or it is also possible to measure the height of the level of bulk and liquid substances by letting the electromagnetic field of the electromagnetic signal transferred on the specific open electromagnetic line located in the measured material penetrate through the measured material. The change of the phase speed of propagation of the signal, which is caused by the interaction of the electromagnetic field with the measured material, is measured. The nature of the equipment designed for the realization of this method of measurement consists in the fact that the output of the generator of the electric signal is connected with the signal input of the measuring block for the measurement of the phase difference of the electric signals through the specific open electromagnetic line. This whole line, or at least its overwhelming part, is inside the measured material. The disadvantage of this method and apparatus for the measurement of humidity consists in the fact that in numerous cases it is not possible to place the specific electromagnetic line inside the measured material, e.g. into reinforced concrete etc., without its destruction or damage.

Further to that, humidity was measured in some cases by placing the humidity meter or, as the case may be, specific electromagnetic line to the surface of the measured material. The disadvantage of this method of measurement consists in the fact that the electromagnetic field is radiated to the air more than to the measured material, which considerably influences inaccuracy of the measurement. Another important disadvantage of this method is that the measurement of humidity only takes place in the surface layer of the measured material, not inside its inner part, which is very disadvantageous e.g. in case of the measurement of humidity in concrete, in old masonry, etc. In this case, humidity is measured in fact outside the interaction space of the measured material with the electromagnetic field and, therefore, the measured values are not representative.

The task of the invention is to find a method and apparatus for the measuring of humidity of materials, which would eliminate the aforesaid shortcomings and be suitable for unlimited applications to various types of materials.

### Principle of the invention

This task is solved by the method and apparatus for the measuring of humidity according to the invention. The method of measuring uses the known principle of interaction of the measured material with the electromagnetic field of the electromagnetic signal transmitted along the open specific electromagnetic line, which is organized either inside the measured material or next to the measured material. Consequently, the differences of measured electrophysical properties during the interaction are evaluated by means of calibration relationships.

The principle of the method of measuring of humidity according to the invention consists in the fact that spatial propagation of the electromagnetic field during the measuring is regulated by means of at least one screening and routing element from the material, the high frequency permittivity of which is higher than the high frequency permittivity of the measured material, whereby variable interaction space is created for the interaction of the electromagnetic field with the measured material in various surface layers, including the possibility of interaction within the whole volume of the measured material, and the screening and routing element limits the interaction space at least from one of its sides.

The advantage of this method consists in the fact that it is not limited in terms of application and, therefore, it enables to measure various materials without their destruction or drilling, with the specific electromagnetic line outside the measured material. By routing the electromagnetic field into the measured material and creating the optimum interaction space, more accurate measuring is achieved in comparison with the known methods, especially with respect to the measuring of humidity inside the measured material, not only in the surface layers.

In an advantageous method of measuring according to the invention, the screening and routing element is mobile in the direction from the measured material and/or in the direction to the measured material. By the change of the distance of the element from the measured space, the shape of the interaction space is changed and regulated for the interaction of the electromagnetic field with the measured material and in dependency on the measured material, its composition etc., it is possible to adjust the conditions of the measuring variably.

In another advantageous method of measuring according to the invention, the spatial propagation of the electromagnetic field is regulated during the measuring by means of at least one limiting element from the material, the high frequency permittivity of which is higher than the high frequency permittivity of the measured material arranged on the opposite side of the measured material against the screening and routing element and limiting the interaction space at least from one of its sides.

The limiting element regulates the shape of the interaction space from the other side against the screening and routing element and increases variability of the measuring conditions during the regulation of the electromagnetic field. With the advantage that the limiting element is also flexible in the direction from the measured material and/or in the direction to the measured material, and by the change of its distance from the measured material, the shape of the interaction space is also changed and regulated.

In one advantageous realization of the invention, the screening and routing element and/or the limiting element has a tabular shape, which is suitable especially for the measuring of humidity of big tabular materials, e.g. walls, panels etc.

In another advantageous realization of the invention, the limiting element can have a semi-closed hollow body, in which the measured material is arranged. This realization is suitable especially for measured materials, from which smaller samples can be separated without the necessity of destructing the material.

Likewise it is suitable when during the measuring, width of the specific electromagnetic line, or, as the case may be, distance of the wires at their ends is changed. Therewith the shape of the electromagnetic field is changed without interruption and in connection with the effect of the screening and routing element or, as the case may be, the limiting element, the shape of the interaction space can be changed and the depth of the measuring can be influenced so that humidity can be measured accurately in various depth layers of the measured material.

The specific electromagnetic line is arranged preferentially outside the measured material and the contactless measuring of humidity in this case is not only considerate, i.e. non-destructive, but also accurate. The specific electromagnetic line can also be located inside the measured material, mainly in the cases when this method can be realized, but it shall be provided with electrical insulation, which shall ensure its separation from the wet material.

The subject of the invention is also the apparatus for the measuring of humidity of materials for the realization of the aforesaid method. The apparatus consists in the familiar method of the source and evaluation unit modified for the generation of the electromagnetic signal to the open specific electromagnetic line and for the measuring and evaluation of the measured values of interaction of the electromagnetic field with the measured material.

The principle of the apparatus according to the invention consists in the fact that it includes at least one screening and routing element from the material, the high frequency permittivity of which is higher than the high frequency permittivity of the measured material and which is arranged next to the measured material at least on one of its sides so that it can route the electromagnetic field into the measured material and create the interaction space covering its volume in the best possible way.

The screening and routing element is advantageously connected with the possibility of a sliding movement in the direction from the measured material and/or in the direction to the measured material so that its effect could be regulated by approximation or distancing.

The screening and routing element can have a tabular shape or it can be provided with arms surrounding the measured material.

In an advantageous realization of the apparatus, at least one limiting element is arranged on the opposite side of the measured material against the screening and routing element. This element is also made of the material, the high frequency permittivity of which is higher than the high frequency permittivity of the measured material, and its effect influences shaping the interaction space from the other side against the screening and routing element.

In this case it is also advantageous when the limiting element is connected with the possibility of a sliding movement in the direction from the measured material and/or in the direction to the measured material.

The limiting element can have a tabular shape or it can have a shape of a semi-closed hollow body, in which the measured material is arranged.

In another advantageous realization of the apparatus, the ends of the specific electromagnetic line are arranged in a flexible way with the possibility of a change of their mutual distance, when it is possible to regulate the shape and depth of the electromagnetic field in the interaction space as required.

The screening and routing element and the limiting element are advantageously made of the sintered ceramic material, the value of the high frequency permittivity of which is higher than in case of a majority of normally measured materials.

In one advantageous realization of the apparatus according to the invention, the specific electromagnetic line is arranged outside the measured material and, therefore, it enables a contactless measuring e.g. of the materials, where destruction, sampling and drilling are not desirable. In another advantageous realization of the apparatus according to the invention, the specific electromagnetic line is arranged inside the measured material and is provided with electrical insulation that electrically separates the measured material form the specific line of the humidity meter.

The advantages of the solution according to the invention consist especially in the fact that shaping and regulation of the interaction space enable not only to replace fully the current known methods of the measuring of humidity and make the results of the measuring, especially the contactless one, significantly more accurate but it also enables the measuring in various depths and under-surface layers of the measured material.

### Brief description of the Drawings

The invention will be explained in more details with the use of the drawings, in which Fig. 1 illustrates the scheme of apparatus for the measuring of humidity with the measured material arranged between the tabular screening and routing element and the tabular limiting element, Fig. 2 the scheme of apparatus for the measuring of humidity with the screening and routing element provided with the arms surrounding the measured material and with the tabular limiting element, Fig. 3 the scheme of apparatus for the measuring of humidity with the tabular screening and routing element and with the limiting element in the shape of a semi-closed hollow body, Fig. 4 the scheme of apparatus for the measuring of humidity with the screening and routing element provided with the arms surrounding the measured material and with the limiting element in the shape of a semi-closed hollow body, Fig. 5 the scheme of apparatus for the measuring of humidity, where the specific electromagnetic line provided with insulation goes through the screening and routing element into the measured material, Fig. 6 the scheme of apparatus for the measuring of humidity, where the specific electromagnetic line provided with insulation goes through directly into the measured material between the screening and routing element and between the limiting element, Fig. 7 humidity meter in a charging hopper, Fig. 8 humidity meter in a piping, Fig. 9 humidity meter in the shape of a mobile board, Fig. 10 humidity meter in the shape of a mobile frill, Fig. 11 humidity meter in the shape of a recessing fork, Fig. 12 humidity meter in the shape of a sliding board, Fig. 13 humidity meter in a gutter, Fig. 14 humidity meter in a tank, Fig. 15 humidity meter in a reservoir, Fig. 16 humidity meter firmly built-in inside the measured material, Fig. 17 humidity-measuring foil, Fig. 18 humidity meter in the shape of a sleeve.

### Detailed description of the preferred embodiments

It shall be understood that the specific examples of realization of the invention described and illustrated hereinbelow are presented for the illustration and not as a limitation of examples of the designs of the invention to the provided examples. The experts familiar with the status of technology will find or will be able to detect, by means of routine experimenting, a bigger or smaller number of equivalents to the specific realizations of the invention, which are described specifically herein. Even such equivalents shall be included within the range of the following claims.

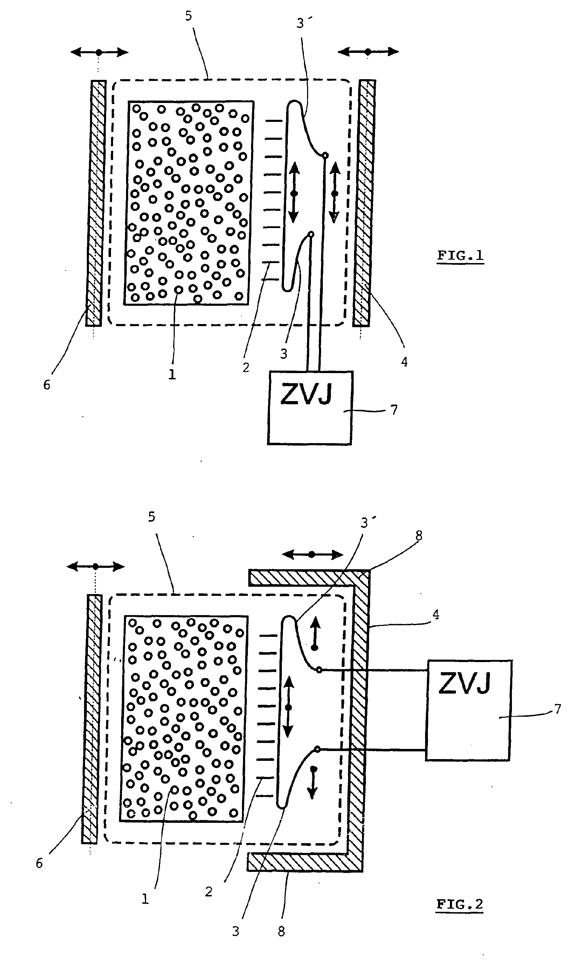

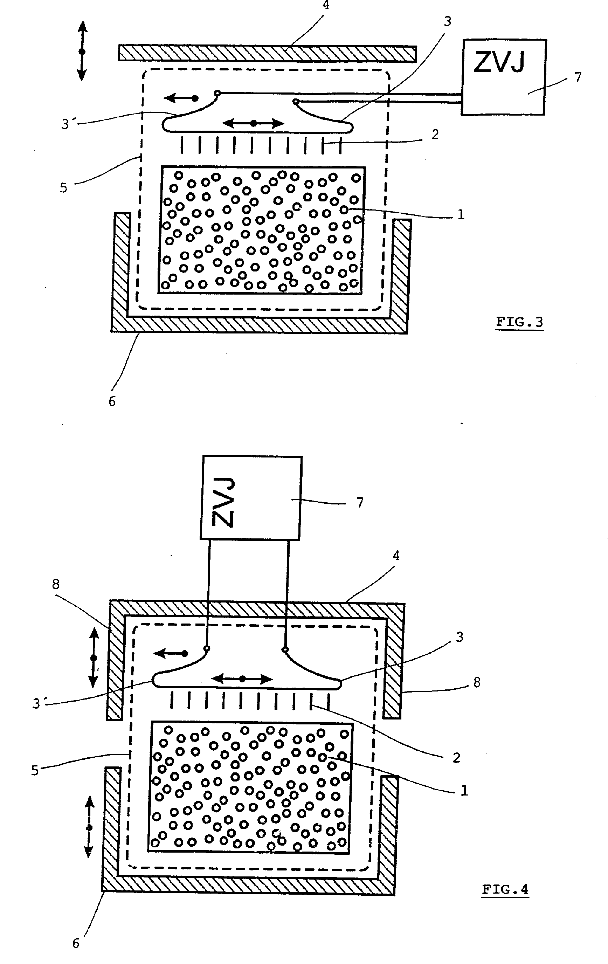

Fig. 1 to Fig. 6 schematically illustrate the preferred embodiments of the invention for contactless as well as contact measuring of humidity. Such examples differ with the arrangement of the specific electromagnetic line with respect to the measured material and also with shape, arrangement and kinematics of the screening and routing element and the limiting element.

In the practical application, the apparatus for the measuring of humidity with the method according to the invention has various possible technical designs and applications, which differ especially with respect to the method of the measured material and practical need of its measuring. In the description of such preferred embodiments, the apparatus for the measuring of humidity according to the invention shall be called collectively the humidity meter 10. This term shall mean all the functional parts of the apparatus, which need not form one assembly unit however (e.g. specific electromagnetic line 3, 3' is usually separated from the source and evaluation unit 7 etc.).

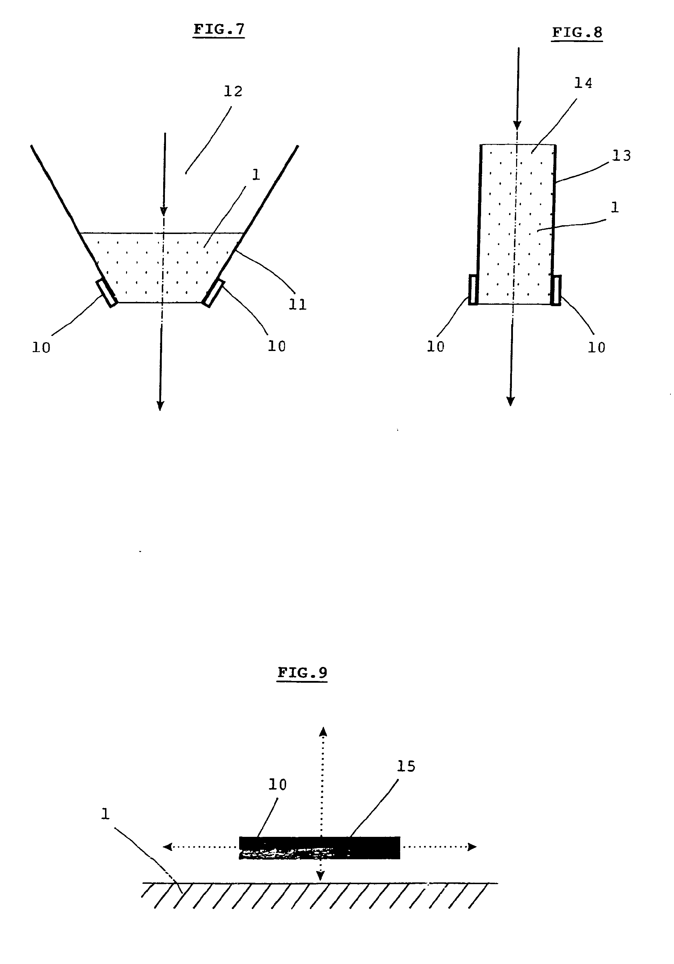

In the first preferred embodiment, illustrated in Fig. 7, the humidity meter 10 can form the inner or outer wall 11 of the charging hopper 12, it can be built in inside it or installed on it. In this case, the measuring of humidity can take place according to the schemes illustrated in Fig. 1 to Fig. 4. It concerns the contact apparatus designed especially for the operation and technological measuring of humidity of bulk and excavated materials like e.g. stone aggregates, ash, clinker, ceramic raw materials, corn, wood sawdust, wood chips, coal or brick clay and partially dewatered sludge. The specific application is the measuring of humidity of sand at the inlet to the technological centre of the mixing facility of concrete mixtures. The charging hopper 12, through which the measured material 1 (sand) flows into the mixing machine, also measures the quantity of water in the sand 1, because parts of the humidity meter 10 are built in inside the wall 11 of the charging hopper 12.

In the second preferred embodiment, illustrated in Fig. 8, the humidity meter 10 can form the wall 13 of the piping 14, it can be built in inside it or installed on it. In this case, the measuring of humidity can take place according to the schemes illustrated in Fig. 1 to Fig. 4. Again it concerns the apparatus for the contact measuring of humidity designed especially for the operation and technological measuring of humidity of bulk and paste materials transported with the piping 14, like e.g. stone aggregates, ash, clinker, ceramic raw materials, corn, wood sawdust or partially dewatered sludge, food pastes (e.g. butter), cosmetic and treatment pastes and ointments. The specific application is e.g. the measuring of humidity of sludge 1 brought with the transport piping 14 into the filter press. The transport piping 14 is also used for the measuring of humidity, because parts of the humidity meter 10 are built in inside the wall 13 of the piping 14.

In the third preferred embodiment, illustrated in Fig. 9, the humidity meter 10 can be formed in the shape of a mobile board 15, which moves in a controlled and registered way in the direction to/from the measured material 1, or, as the case may be, also along the measured material 1. The measuring of humidity can take place according to the schemes illustrated in Fig. 1 and Fig. 2. It concerns a contactless measuring designed especially for the operation and technological measuring of humidity of solid materials in various depths of the measured material 1 in dependency on the distance of the board 15 from the material 1. Examples of materials: Independent building parts - concrete (e.g. panels), ceramic (e.g. bricks), wooden (e.g. battens, beams). Assembled building structures - floors, walls, ceilings. In this case the specific application is the measuring of humidity of concrete ceilings 1 in buildings before another floor layers are placed on them. On the concrete board of the ceiling 1, a humidity-measuring mobile board 15 is placed and it is distanced from or approximated to the ceiling 1 in a controlled and registered way. With the changing distance of the humidity-measuring mobile board 15 from the ceiling, the thickness of the concrete, in which humidity is measured, is changed. In this way it is also possible to identify the depth distribution of humidity in the board of the ceiling 1.

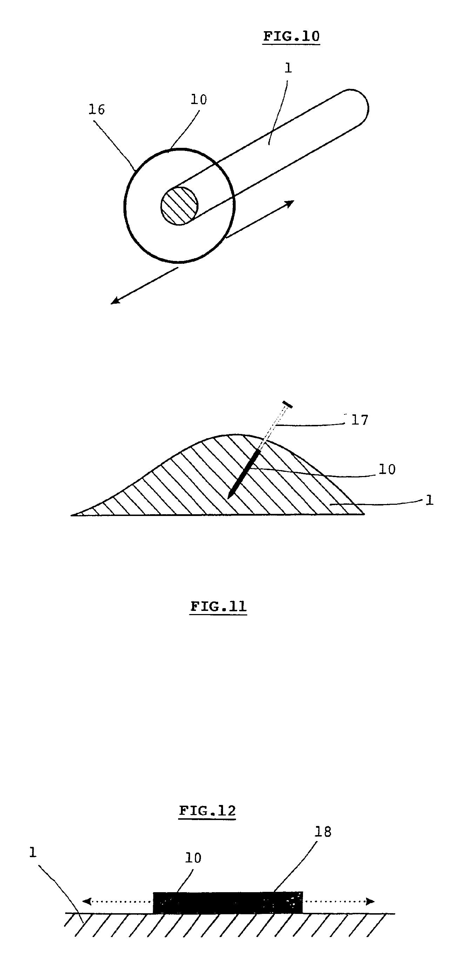

In the fourth preferred embodiment, illustrated in Fig. 10, the humidity meter 10 is formed in the shape of a mobile frill 16, which is flexibly arranged against the measured material 1, which goes through the frill 16 in the direction of its length axis. The measuring of humidity can take place according to the schemes illustrated in Fig. 1 to Fig. 4. It concerns a contactless measuring designed especially for the operation and technological measuring of humidity of solid materials along the material with one prevailing dimension - length. It can concern e.g. independent concrete building components (e.g. columns and trusses) or wooden (e.g. columns, trusses) or, as the case may be, assembled building structures like e.g. columns and trusses in truss structures. In this case the specific application is the measuring of humidity of wooden beams 1, which is realized by moving with the humidity-measuring mobile frill 16 in a controlled and registered way against the beam 1 so that the beam 1 goes through the frill 16. In this way the length distribution of humidity in the beam 1 is identified.

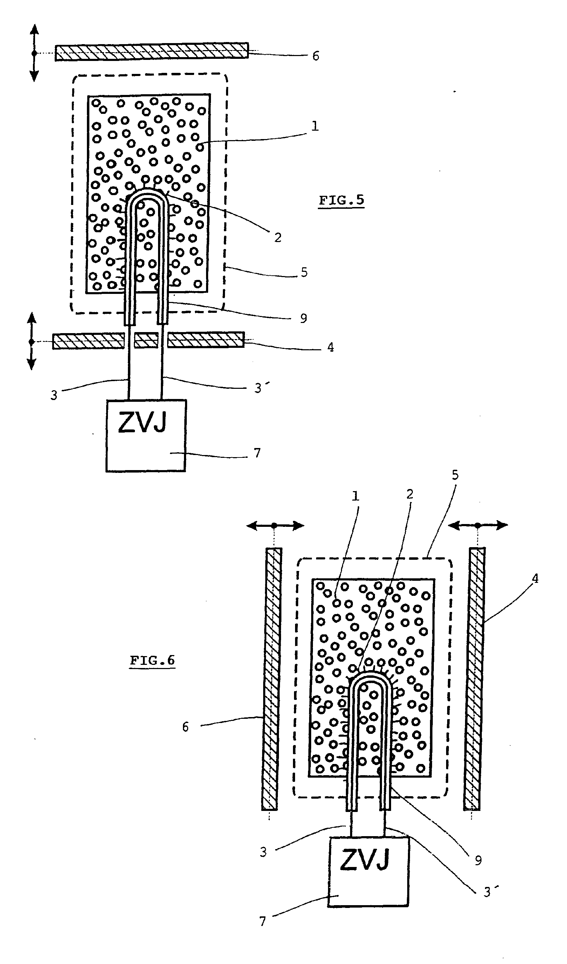

In the fifth preferred embodiment, illustrated in Fig. 11, the humidity meter 10 can have a form of a recessing fork 17, which gets stuck in the measured material 1. The measuring of humidity can take place according to the schemes illustrated in Fig. 5 and Fig. 6. It concerns a contact measuring designed especially for the operation and technological measuring of humidity of bulk, excavated and paste materials stored in dumping grounds e.g. on piles. Examples of materials: bulk - stone aggregates, ash, clinker, ceramic raw materials, corn, wood sawdust, wood chips, coal. Excavated - brick clay, partially dewatered sludge. Paste - sludge and pastes. Specific application: stick the humidity-measuring recessing fork 17 into the heap of the wood chips 1 and, thereby, identify humidity of the chips 1 in the place of sticking. It is possible to measure in various positions and depths and, therefore, it is possible to derive the volume distribution of humidity of chips 1.

In the sixth preferred embodiments, illustrated in Fig. 12, the humidity meter 10 is made as a sliding board 18, which moves in a controlled and registered way on the surface of the measured material 1. The measuring of humidity can take place according to the schemes illustrated in Fig. 1 and Fig. 2. It concerns a contact measuring designed especially for the operation and technological measuring of surface distribution of humidity of solid materials in the surface layer of the material. Examples of materials: Independent building components - concrete (e.g. panels) or ceramic (e.g. bricks), wooden (e.g. battens, beams). Assembled building structures - floors, walls, ceilings. Specific application: The measuring of humidity of walls 1 of the buildings is realized by moving the humidity-measuring sliding board 18 in a controlled and registered way on the wall 1. Inside the sliding board 18, the humidity meter 10 is built-in. Therewith the surface distribution of humidity in the surface layer of the wall 1 is identified.

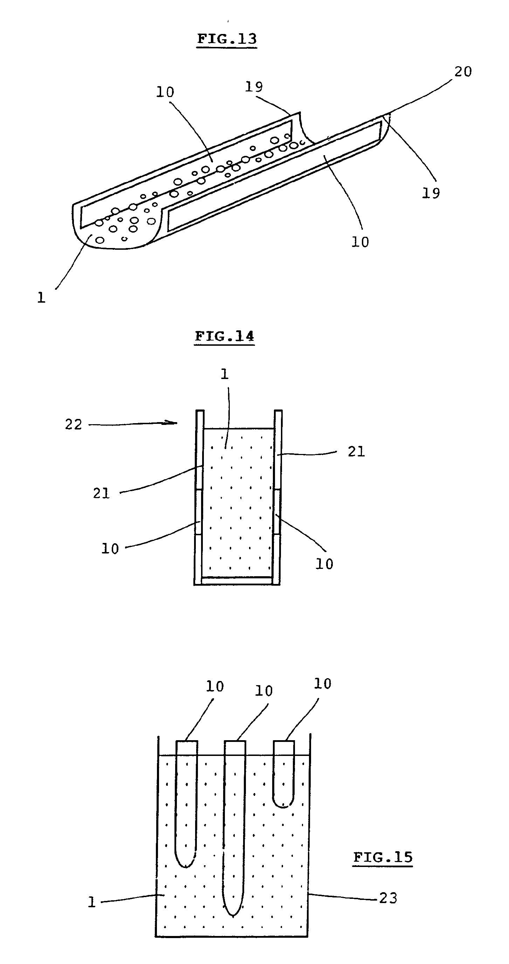

In the seventh preferred embodiment, illustrated in Fig. 13, the humidity meter 10 can form the inner or outer wall 19 of the gutter 20, or, as the case may be, its bottom, it can be built in inside them or installed on them. In this case, the measuring of humidity can take place according to the schemes illustrated in Fig. 1 to Fig. 4. It concerns a contact measuring designed especially for the operation and technological measuring of humidity of bulk materials, like e.g. stone aggregates, ash, clinker, ceramic raw materials, corn, wood sawdust, wood chips, coal and other materials transported in the gutters or on transport conveyors. In this case the specific application is the measuring of humidity of coal 1, which is transported e.g. to the boiler on a conveyor belt in the shape of a gutter 20, inside the walls 19 of which functional parts of the humidity meter 10 are built-in.

In the eighth preferred embodiment, illustrated in Fig. 14, the humidity meter 10 can form the inner or outer wall 21 of a tank 22, it can be built in inside it or installed on it. In this case, the measuring of humidity can take place according to the schemes illustrated in Fig. 1 to Fig. 4. It concerns a contact measuring designed especially for the operation and technological measuring of humidity of bulk, excavated and paste materials stored in tanks. Examples of materials: bulk - stone aggregates, ash, clinker, ceramic raw materials, corn, wood sawdust, wood chips, coal. Excavated - brick clay, partially dewatered sludge. Paste - sludge and pastes. The specific application is e.g. measuring of humidity of the brick clay 1 in a tank 22 of a ball mill. The tank 22 has a humidity meter 10, which is used for the identification of humidity, built in inside the wall 21.

In the ninth preferred embodiment, illustrated in Fig. 15, the humidity meter 10 is arranged directly in the measured material 1 in a reservoir 23. In this case, the measuring of humidity can take place according to the schemes illustrated in Fig. 5 and Fig. 6. It concerns a contact measuring designed especially for the operation and technological measuring of humidity of bulk, excavated and paste materials stored in reservoirs. The bulk material can be e.g. stone aggregates, ash, clinker, ceramic raw materials, corn, wood sawdust, wood chips, coal. Excavated materials are e.g. brick clay, partially dewatered sludge. Paste materials are sludge and pastes. The specific application is the measuring of humidity of corn 1 in the corn silo 23, which is realized by immersing more sets of rods of various lengths, which are used as sensors of the humidity meter 10, into the silo 23. Each set of rods measures humidity of corn 1 within the range of its length so that it is possible to measure humidity of corn 1 in various depths in the silo 23 on on-going basis.

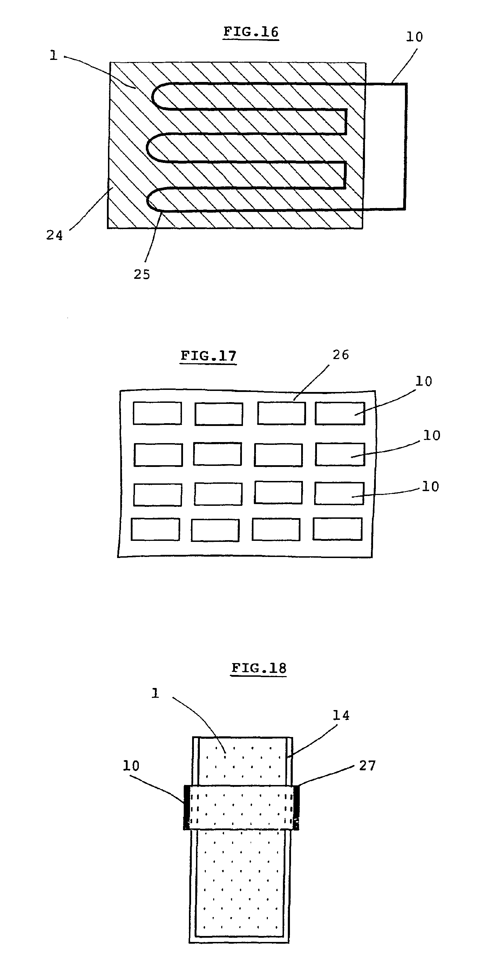

In the tenth preferred embodiment, illustrated in Fig. 16, the humidity meter 10 can be firmly built in inside the measured material 1. In this case, the measuring of humidity can take place according to the schemes illustrated in Fig. 1 and Fig. 6. It concerns a contact measuring designed especially for the operation and technological measuring of volume distribution of humidity of solid materials in the volume of the material and for the indications of entry of water into the material or leakages and seepage of water through the material. Examples of materials: Concrete or ceramic panels, concrete columns, foundation stripes and slabs of buildings, walls of concrete silos, tanks and reservoirs. The specific application is e.g. the continuous measuring of humidity of the core of the reinforced concrete water dam 24, which takes place by using the steel armature 25 in the concrete simultaneously as a humidity-measuring sensor of the humidity meter 10.

In the eleventh preferred embodiment, illustrated in Fig. 17, the humidity meter 10 is arranged on the humidity-measuring foil 26 or inside it. In this case the measuring of humidity takes place according to the schemes illustrated in Fig. 1 and Fig. 6. It concerns a contact measuring designed especially for the operation and technological measuring of surface distribution of humidity of solid materials in contact with the humidity-measuring foil. It identifies spatial localization of leakage of the foil, indication of entry of water into the material and seepages of water through the material. The typical application consists in exact detection of the perforation of the insulating foil e.g. in bridge structures, in foundations under the level of underground water, in dams of water works etc. Here the specific application represents e.g. the identification of spatial localization of perforation of the hydroinsulation foil in the bridge structure or in the foundation slab of a house, which is realized by pressing the sensors for the humidity meters 10, which sense humidity in the closest surroundings, on the hydroinsulation humidity-measuring foil 26 with an electro-conductive layer. The place of leakage is identified according to the position of the humidity meter 10, which indicates the extreme increase of humidity in comparison with the previous time and the surrounding humidity meters 10.

In the twelfth preferred embodiment, illustrated in Fig. 18, the humidity meter 10 is made in the shape of a sleeve 27, which is arranged on the outer or inner wall of the piping 14. In this case, the measuring of humidity takes place according to the schemes illustrated in Fig. 1 to Fig. 4. It concerns a contact measuring designed especially for the operation and technological measuring of humidity of bulk and paste materials. Examples of materials: bulk - stone aggregates, ash, clinker, ceramic raw materials, corn, wood sawdust. Paste - partially dewatered sludge, food pastes (e.g. butter), cosmetic and treatment pastes and ointments. In this case the specific application is the measuring of humidity of butter 1 brought through the piping 14 into the dewatering press. The piping 14, through which the butter 1 flows, is not used as a humidity-measuring sensor, but the humidity meter 10 is located on the piping 14 from the outer side in the form of a sleeve 27. As an equivalent, the sleeve 27 can also be arranged inside the piping 14.

### Industrial applicability

The method of measuring of humidity of materials and apparatus for the realization of this method according to the invention can be used in a wide spectrum of fields for the measuring of humidity of various materials.

### Overview of the positions used in the drawings

- 1: Measured material
- 2: Electromagnetic field
- 3: Specific electromagnetic line
- 3': Specific electromagnetic line
- 4: Screening and routing element
- 5: Interaction space
- 6: Limiting element
- 7: Source and evaluation unit
- 8: Arm
- 9: Insulation
- 10: Humidity meter
- 11: Wall of charging hopper
- 12: Charging hopper
- 13: Wall of piping
- 14: Piping
- 15: Mobile board
- 16: Mobile frill
- 17: Recessing fork
- 18: Sliding board
- 19: Wall of gutter
- 20: Gutter
- 21: Wall of tank
- 22: Tank
- 23: Reservoir
- 24: Reinforced concrete water dam
- 25: Steel armature
- 26: Humidity-measuring foil
- 27: Sleeve

## Claims

1. The method for measuring of humidity of materials, by interaction of the measured material (1) with the electromagnetic field (2) of the electromagnetic signal transmitted along the open specific electromagnetic line (3) and the measuring of electrophysical properties during the interaction and their follow-up evaluation by means of the calibration relationships, **characterized by** that the spatial propagation of the electromagnetic field (2) is regulated during the measuring by means of at least one screening and routing element (4) from the material, the high frequency permittivity of which is higher than the high frequency permittivity of the measured material (1), during which a variable interaction space (5) is created for the interaction of the electromagnetic field (2) with the measured material (1) in various surface layers, including the possibility of the interaction within the whole volume of the measured material (1), and the screening and routing element (4) limits the interaction space (5) at least from one of its sides.

2. The method for measuring according to the claim 1, **characterized by** that the screening and routing element (4) is mobile in the direction from the measured material (1) and/or in the direction to the measured material (1).

3. The method for measuring according to the claim 1 or 2, **characterized by** that the spatial propagation of the electromagnetic field (2) is regulated during the measuring by means of at least one limiting element (6) from the material, the high frequency permittivity of which is higher than the high frequency permittivity of the measured material (1) arranged on the opposite side of the measured material (1) against the screening and routing element (4) and limiting the interaction space (5) at least from one of its sides.

4. The method for measuring according to the claim 3, **characterized by** that the limiting element (6) is mobile in the direction from the measured material (1) and/or in the direction to the measured material (1).

5. The method for measuring according to the claims 1 to 4, **characterized by** that the screening and routing element (4) and/or the limiting element (6) has a tabular shape.

6. The method for measuring according to the claim 3 or 4, **characterized by** that the limiting element (6) has a shape of a semi-closed hollow body, in which the measured material (1) is arranged.

7. The method for measuring according to at least one of the claims 1 to 6, **characterized by** that during the measuring, the shape of specific electromagnetic line (3, 3') is changed, during which the shape of the interaction space (5) is changed.

8. The method for measuring according to at least one of the claims 1 to 7, **characterized by** that the specific electromagnetic line (3, 3') is arranged outside the measured material (1).

9. The method for measuring according to at least one of the claims 1 to 7, **characterized by** that the specific electromagnetic line (3, 3') is arranged inside the measured material (1) and is provided with electrical insulation (9).

10. The apparatus for measuring of humidity of materials by interaction of the measured material (1) with the electromagnetic field (2) made by the source and evaluation unit (7) for generating the electromagnetic signal to the open specific electromagnetic line (3, 3') and the measuring and evaluation of the measured values of the interaction of the electromagnetic field (2) with the measured material (1), **characterized by** that it includes at least one screening and routing element (4) from the material, the high frequency permittivity of which is higher than the high frequency permittivity of the measured material (1) and which is arranged next to the measured material (1) at least on one of its sides.

11. The apparatus according to the claim 10, **characterized by** that the screening and routing element (4) is installed with the possibility of a sliding movement in the direction from the measured material and/or in the direction to the measured material (1).

12. The apparatus according to the claim 10 or 11, **characterized by** that the screening and routing element (4) has a tabular shape.

13. The apparatus according to the claim 10 or 11, **characterized by** that the screening and routing element (4) is provided with the arms (8) surrounding the measured material (1).

14. The apparatus according to at least one of the claims 10 to 13, **characterized by** that on the opposite side of the measured material (1) against the screening and routing element (4) at least one limiting element (6) is arranged from the material, the high frequency permittivity of which is higher than the high frequency permittivity of the measured material (1).

15. The apparatus according to the claim 14, **characterized by** that the limiting element (6) is connected with the possibility of a sliding movement in the direction from the measured material (1) and/or in the direction to the measured material (1).

16. The apparatus according to the claim 14 or 15, **characterized by** that the limiting element (6) has a tabular shape.

17. The apparatus according to the claim 14 or 15, **characterized by** that the limiting element (6) has a shape of a semi-closed hollow body, in which the measured material (1) is arranged.

18. The apparatus according to at least one of the claims 10 to 17, **characterized by** that the ends of the specific electromagnetic line (3, 3') are arranged in a flexible way with the possibility of a change of their mutual distance.

19. The apparatus according to claims 10 and 14, **characterized by** that the screening and routing element (4) and the limiting element (6) are made of the sintered ceramic material.

20. The apparatus according to at least one of the claims 10 to 19, **characterized by** that the specific electromagnetic line (3, 3') is arranged outside the measured material (1).

21. The apparatus according to at least one of the claims 10 to 19, **characterized by** that the specific electromagnetic line (3,3'), is arranged inside the measured material (1) and is provided with electrical insulation (9).
